# EUROPÄISCHE PATENTSCHRIFT

(11) **EP 2 334 939 B1**
(45) Veröffentlichungstag und Bekanntmachung des Hinweises auf die Patenterteilung: **17.04.2013**
(21) Anmeldenummer: 09783458.4
(22) Anmeldetag: 28.09.2009
(51) Int. Cl.: F16D 1/076, F16D 1/116, F16C 19/18, F16C 35/073, B60B 27/00, F16D 1/10

(54) **RADLAGERANORDNUNG MIT EINER VORRICHTUNG ZUR AXIALEN FIXIERUNG**
WHEEL BEARING ARRANGEMENT WITH DEVICE FOR AXIAL FIXATION
ENSEMBLE ROULEMENT DE ROUE AVEC DISPOSITIF DE FIXATION AXIALE

(30) Priorität: 06.10.2008 DE 102008050127
(43) Veröffentlichungstag der Anmeldung: 22.06.2011
(73) Patentinhaber: Schaeffler Technologies AG & Co. KG, 91074 Herzogenaurach (DE)
(72) Erfinder: NIEBLING, Peter, 97688 Bad Kissingen (DE); LANGER, Roland, 97523 Schwanfeld (DE); LORENZ, Sebastian, 08237 Rothenkirchen (DE)
(86) Internationale Anmeldenummer: PCT/EP2009/062496
(87) Internationale Veröffentlichungsnummer: WO 2010/040651

(56) Entgegenhaltungen:
- DE-A1-102006 032 159
- DE-A1-102007 010 084
- JP-A- 2007 062 647
- US-A1- 2002 072 421

## Beschreibung

### Gebiet der Erfindung

Die Erfindung betrifft eine Radlageranordnung mit einer Vorrichtung zur axialen Fixierung eines drehbaren Radlagerteils eines Radlagers mit einem drehbaren Antriebsteil eines Antriebsstranges.

Eine derartige Radlageranordnung mit Vorrichtung zur axialen Fixierung kommt bei der Montage eines Radlagers mit Stirnverzahnung zum Einsatz und ist aus der DE 10 2007 010 084 A1 bekannt. Bei dem grundsätzlich platzsparenden Aufbau eines Radlagers mit Stirnverzahnung muss sichergestellt werden, dass der Eingriff der radlagerseitigen Stirnverzahnung in die antriebsstrangseitige Stirnverzahnung gewährleistet ist. In der Regel verhindert der Radträger eine visuelle Kontrolle dieses Eingriffs der beiden Verzahnungen, womit nicht mit abschließender Sicherheit festgestellt werden kann, ob die Zähne der Stirnverzahnungen aufeinander stehen oder ineinandergreifen. Auch durch das anschließende Festziehen der Zentralschraube, die das Radlager an der Gelenkwelle befestigt, ist nicht sicherzustellen, ob die Verbindung Formschluss aufweist oder nur kraftschlüssig zustandegekommen ist. In Anbetracht der Drehmomente, die von den Stirnverzahnungen übertragen werden, führt eine falsch installierte Radlagereinheit beim Betrieb unmittelbar zu einer Zerstörung der Verzahnungen und ist unter allen Umständen zu vermeiden.

Zur Vermeidung dieser Art von Fehlmontage sind bisher keine Lösungsvorschläge aus dem Stand der Technik bekannt.

Der Erfindung liegt die Aufgabe zu Grunde, eine Vorrichtung anzugeben, die das Auffinden der korrekten Zahnposition zweier Stirnverzahnungen bei der Radlagermontage erleichtert.

Diese Aufgabe wird bei einer Vorrichtung der eingangsgenannten Art dadurch gelöst, dass die Vorrichtung zur axialen Fixierung einen im wesentlichen zylindrischen oder ringförmigen Befestigungsteil und ein Rastelement aufweist, wobei entweder der im wesentlichen zylindrische oder ringförmige Befestigungsteil zur Befestigung an dem drehbaren Antriebsteil und das Rastelement zur Verrastung mit dem drehbaren Radlagerteil vorgesehen ist oder umgekehrt.

Erfindungsgemäß ist vorgesehen, dass das drehbare Antriebsteil und das drehbare Radlagerteil durch die Vorrichtung zur axialen Fixierung, bevor die Zentralschraube bei der Montage des Radlagers festgezogen wird, miteinander verbindbar sind. Es handelt sich also bei der Vorrichtung zur axialen Fixierung um eine Montagehilfe, die einen gegenseitigen Eingriff einer radlagerseitigen Stirnverzahnung mit einer antriebsstrangseitigen Stirnverzahnung sicherstellen soll. Hierfür wird der im wesentlichen zylindrische oder ringförmige Befestigungsteil der Vorrichtung entweder an dem drehbaren Antriebsteil oder an dem drehbaren Radlagerteil befestigt. In entsprechender Weise wird das Rastelement der Vorrichtung zur axialen Fixierung entweder mit dem drehbaren Radlagerteils oder mit dem drehbaren Antriebsteil verrastetet.

Bei dem drehbaren Antriebsteil handelt es sich um ein drehendes Bauteil, welches Bestandteil des Antriebsstranges ist, an den auch das Radlager zur Antriebsmomentübertragung angeschlossen werden muss. Zum Antriebsstrang gehören also beispielsweise eine Welle, Bauteile eines Tripodegelenks, wie zum Beispiel eine Gelenkglocke, oder auch verschiedene Arten von Abstandsringen.

Bei dem drehbaren Radlagerteil handelt es sich um Bauteile des Radlagers, die der Bewegung des Rades nachfolgen, wie beispielsweise ein Innenring, ein Schleuderring einer Dichtungsanordnung, ein Wälznietbund, eine Radnabe oder ähnliche Bauteile.

Erfindungsgemäß ist das Rastelement der Vorrichtung zur axialen Fixierung nur dann einrastbar, wenn eine radlagerseitige Stirnverzahnung zumindest teilweise in eine antriebsstrangseitige Stirnverzahnung eingreift. Damit kann der Monteur auf sehr leichte Weise erkennen, ob ein Eingriff bereits vorliegt. Denn eine Befestigung durch die Vorrichtung zur axialen Fixierung wird nur dann stattfinden, wenn ein (gegebenenfalls teilweiser) Eingriff der Stirnverzahnungen vorliegt und die Verschraubung mit der Zentralschraube überhaupt den maximalen Formschluss erzielen kann. Der Monteur kann sich sicher sein, dass das Anziehen der Zentralschraube zum Ziel führt, wenn eine axiale Fixierung des drehbaren Radlagerteils mit dem drehbaren Antriebsteil durch die Vorrichtung gelungen ist. Damit vereinfacht und beschleunigt sich der Montageprozess, der sowohl aufgrund der schnelleren Montage als auch aufgrund der Schadensvermeidung wirtschaftlicher durchgeführt werden kann.

Bei einer vorteilhaften Ausführungsform ist die Vorrichtung zur axialen Fixierung zur Umfassung der Stirnverzahnung vorgesehen oder selbst zumindest teilweise von dieser und/oder dem Innenring des Radlagers umfasst. Damit ergeben sich die Optionen, dass einerseits die Vorrichtung noch eine abschirmende oder sogar dichtende Funktion gegenüber der Stirnverzahnung aufweist oder andererseits aufgrund des geringen Radialmaßes Material eingespart. Ist die Vorrichtung zur axialen Fixierung zur Umfassung der Stirnverzahnung vorgesehen, so ist es vorteilhaft, wenn beispielsweise ein Schleuderring der Dichtungsanordnung mit der Vorrichtung kombiniert oder mit dieser einstückig ausgeführt wird.

Bei einer vorteilhaften Ausführungsform ist das Befestigungsteil der Vorrichtung zur axialen Fixierung durch Presssitz, Klemmungen, Verrastung oder Verschraubung am drehenden Antriebsteil oder am drehenden Radlagerteil befestigt. Alternativ ist auch eine Einlage des Befestigungsteils in einer Nut des entsprechenden drehenden Teiles möglich. Im Grunde sind hier weitere andere gängige Befestigungsmöglichkeiten anwendbar, die sowohl durch den Monteur, als auch werkseitig verwendet werden können.

Bei einer vorteilhaften Ausführungsform ist das Rastelement bei der Montage des Radlagers in einem verrasteten Zustand elastisch unbeansprucht und in einem nicht verrasteten Zustand elastisch beansprucht. In diesem Zusammenhang ist der Zustand, den das Rastelement vor der Montage einnimmt unbeachtlich. Jedoch bei der Montage wird durch die Zusammenführung der zu fixierenden drehenden Teile ein Zustand der elastischen Beanspruchung des Rastelementes herbeigeführt. Beispielsweise könnte die Vorrichtung seitens der Gelenkglocke gehalten werden, wobei ein Innenradius der Radnabe eine elastische Beanspruchung des Rastelementes solange aufrechterhält, bis die gewünschte Position erreicht ist und das Rastelement in seine ursprüngliche Form (elastisch unbeanspruchter Zustand) übergehen kann und eine Verrastung herbeiführt. Das Rastelement sorgt nun dank eines Anschlages oder eines Rückhalter Elementes, wie beispielsweise eine Nut, dafür, dass eine axiale Rückbewegung der zu fixierenden drehbaren Teile nicht möglich ist. Ferner ist eine Fortsetzung der axialen Bewegungen durch den maximalen Eingriff der Stirnverzahnungen verhindert. Damit wird die axiale Fixierung in beide Axialrichtungen realisiert.

Bei einer vorteilhaften Ausführungsform weist die Vorrichtung zur axialen Fixierung ein Befestigungsteil auf, welches seinerseits das Rastelement aufweist, einstückig mit diesem verbunden ist, mit diesem verbindbar ist oder mit diesem identisch ist. Neben dem Rastelement und dem Befestigungsteile kann eine Vorrichtung zur axialen Fixierung auch andere Teile mit anderen Funktionen aufweisen. Beispielsweise kann die Vorrichtung zusätzlich eine Dichtung aufweisen oder als Drehzahlgeber für eine Drehzahlmessanordnung ausgeführt sein.

Es ist sinnvoll eine Vorrichtung zur axialen Fixierung insoweit keine anderen Teile als das Rastelementes und das Befestigungsteil vorgesehen sind auch Fixierelement zu nennen. Insbesondere wenn Befestigungsteil und Rastelement einstückig miteinander verbunden sind, reduziert das Fixierelement die Bauteilanzahl und vereinfacht die Herstellung der Vorrichtung zur axialen Fixierung. Besonders vorteilhaft ist des, wenn das Rastelement und das Befestigungsteil ineinander integriert sind, beziehungsweise miteinander identisch, weil diese Art der Vereinfachung umso mehr greift.

Bei einer vorteilhaften Ausführungsform kann das Rastelement als Rastnase oder als Rastring ausgeführt werden. In Abhängigkeit von der gewünschten Rückhaltekraft können mehrere Rastnasen oder ein umfänglich gegebenenfalls stellenweise unterbrochener Rastring vorgesehen werden. Grundsätzlich ist eine Mehrzahl von Rastnasen sinnvoll, wenn mit relativ wenig Material eine über den Umfang gleichmäßige Rückhaltekraft generiert werden soll. Bei einfacheren Ausführungen können durchaus eine oder zwei Rastnasen die notwendige Rückhaltekraft aufbringen.

Vorteilhafterweise können Rastring und/oder Rastnase beispielsweise mittels eines "Widerhakenprinzips" eine Entlastung verhindern oder lediglich aufgrund der im elastisch unbeanspruchten Zustand eingenommenen Form die gewünschte Stellung anzeigen. Verwirklicht der Rastring oder die Rastnase das Widerhakenprinzip, so wird eine gewaltsame Entrastung zu einem Materialschaden an der Vorrichtung führen. Im Gegensatz dazu wird eine Fixierung basierend auf der Form des Rastelementes zu einer Verbindung führen, die durch eine erneute elastische Beanspruchung wieder rückgängig gemacht werden kann, um beispielsweise eine erneute Fixierung zu ermöglichen. Dies ist insbesondere dann von Vorteil, wenn der Monteur einen Montagefehler an anderer Stelle erkannt hat, der eine Deinstallation des Radlagers von der Antriebseinheit erfordert oder ein bereits installiertes Radlager austauschen muss.

Vorteilhafterweise weist eine Stirnverzahnung umfassende Vorrichtung zur axialen Fixierung eine Dichtung zum Schutz der Stirnverzahnungen auf. Damit übernimmt die Vorrichtung zusätzlich eine Haltefunktion für beispielsweise eine Dichtlippe und verhindert das Eindringen von Feuchtigkeit und Schmutzpartikel in den Eingriffraum der Stirnverzahnungen.

Vorteilhafterweise ist die Vorrichtung zur axialen Fixierung, insbesondere die Rastnase oder der Rastring, zur Abgabe eines Geräusches vorgesehenen, welches dem Monteur als Erkennungssignal für die korrekte Zahnposition der Stirnverzahnungen dient. Beispielsweise kann ein klickendes Geräusch durch eine entsprechend große Vorspannungskraft des Rastelementes oder anderweitig verwirklicht werden und somit als akustisches Kontrollsignal dienen.

Bei einer vorteilhaften Ausführungsform ist die Vorrichtung zur axialen Fixierung einstückig mit dem drehbaren Radlagerteil oder dem drehbaren Antriebsteil verbunden. Damit entfällt ein separater Montageschritt, der zur Anbringung der Vorrichtung am drehenden Bauteile vorgesehen ist. So ist es beispielsweise denkbar, dass eine einstückige Ausführung mit einer Gelenkglocke dazu führt, das bei der Gelenkwellenmontage des Radlagers dieses lediglich aufgesteckt werden muss, bevor die Zentralschraube angezogen wird.

Vorteilhafte Ausbildungen bevorzugte Weiterbildungen der Erfindung sind den Figurenbeschreibungen und/oder den Unteransprüchen zu entnehmen.

Im Folgenden wird die Erfindung anhand der in den Figuren dargestellten Ausführungsbeispielen näher beschrieben und erläutert.

Es zeigen:
- Fig. 1: eine geschnittene Ansicht eines Radlagers mit Stirnverzahnung gemäß dem Stand der Technik,
- Fig. 2: eine geschnittene Ansicht eines Radlagers mit Stirnverzahnung und einem Rastring in einem elastisch beanspruchten Zustand,
- Fig. 3: ein Ausschnitt der Stirnverzahnungen aus Fig. 2 in radialer Betrachtungsrichtung,
- Fig. 4: eine geschnittene Ansicht des Radlagers aus Fig. 2 mit dem Rastring in einem elastisch nichtbeanspruchten Zustand,
- Fig. 5: ein Ausschnitt der Stirnverzahnungen aus Fig. 4 in radialer Betrachtungsrichtung,
- Fig. 6: eine geschnittene Ansicht des Radlagers aus Fig. 4 mit festgezogener Zentralschraube,
- Fig. 7: ein vergrößerter Ausschnitt des Bereiches um den Rastring aus Fig. 6,
- Fig. 8: eine geschnittene Ansicht eines Radlagers in einem ersten Montagezustand mit einem ersten elastisch beanspruchten Fixierelement,
- Fig. 9: ein vergrößerter Ausschnitt des Bereiches um eine Rastnase des ersten Fixierelements aus Fig. 8,
- Fig. 10: eine geschnittene Ansicht des Radlagers aus Fig. 8 In einem zweiten Montagezustand mit dem ersten elastisch unbeanspruchten Fixierelement,
- Fig. 11: ein vergrößerter Ausschnitt des Bereiches um die Rastnase des ersten Fixierelements aus Fig. 10,
- Fig. 12: eine geschnittene Ansicht eines zweiten Fixierelements im elastisch unbeanspruchten Zustand,
- Fig. 13: eine geschnittene Ansicht eines dritten Fixierelements im elastisch unbeanspruchten Zustand,
- Fig. 14: eine geschnittene Ansicht eines vierten Fixierelements im elastisch unbeanspruchten Zustand,
- Fig. 15: eine geschnittene Ansicht eines fünften Fixierelements im elastisch unbeanspruchten Zustand, und
- Fig. 16: eine geschnittene Ansicht eines sechsten Fixierelements im elastisch unbeanspruchten Zustand.

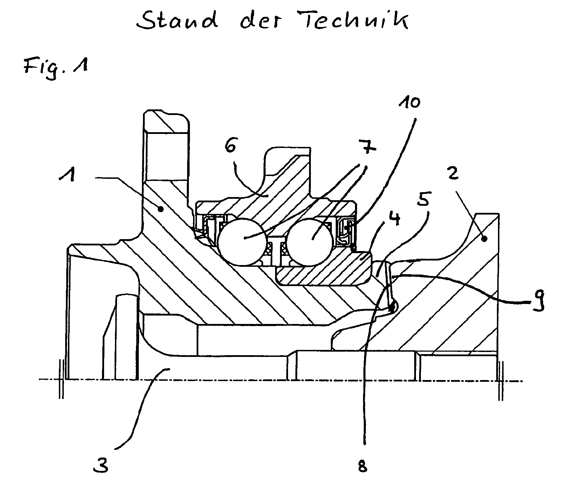

Fig. 1 zeigt eine geschnittene Ansicht eines Radlagers mit Stirnverzahnung 8 gemäß dem Stand der Technik. Das Radlager ist ein Schrägkugellager mit 2 Wälzkörperreihen 7, einem mit einem Befestigungsflansch integrierten Außenring 6 und einem Innenring 4. Die Stirnverzahnung 8 ist an einem Wälznietbund 5 ausgebildet und befindet sich im Eingriff mit einer Stirnverzahnung 9 einer Gelenkglocke 2, wobei die Stirnverzahnung 9 auch Gegenstirnverzahnung genannt werden kann. Das Radlager ist bereits vollständig montiert, das heißt die Zentralschraube 3 spannt eine Radnabe 1 über die Stirnverzahnungen 8,9 mit der Gelenkglocke 2 vor.

Beim Installationsvorgang besteht das bereits eingangs diskutierte Problem der Auffindung der korrekten Zahnposition bei der Stirnverzahnungen 8,9. Weder das Radlager noch die Gelenkglocke 2 geben irgendwelche Hilfestellungen einen korrekten Eingriff der Stirnverzahnungen 8,9 anzuzeigen. Da bei der Montage die radiale Ansicht auf die Stirnverzahnungen 8,9 in der Regel vom Radträger verdeckt wird, ist der Monteur allein auf sein Installationsgeschick angewiesen.

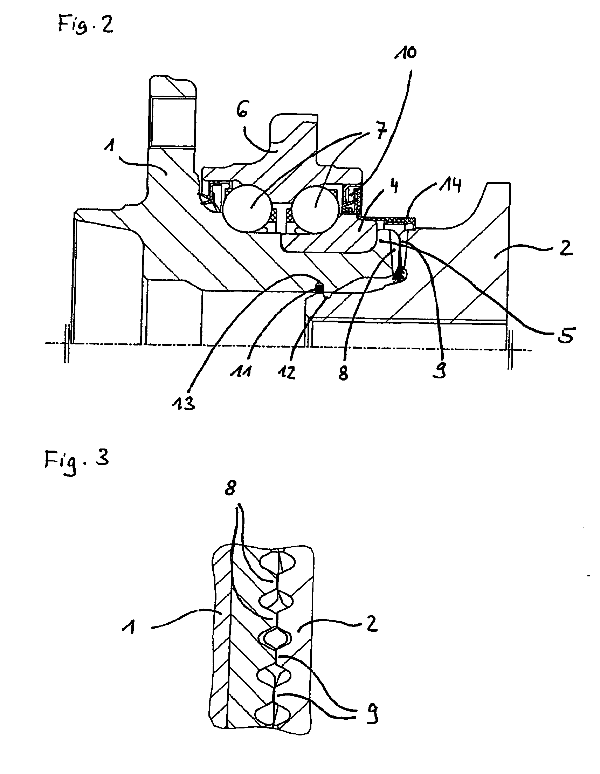

Fig. 2 zeigt eine geschnittene Ansicht eines Radlagers mit Stirnverzahnung 8 und einem Rastring 11 in einem elastisch beanspruchten Zustand. Das Radlager befindet sich in einem ersten Montagezustand, bei dem noch kein Eingriff der Stirnverzahnung 8 in die Gegenverzahnung 9 der Gelenkglocke 2 vorliegt.

Hierbei fungiert der Rastring 11 als Vorrichtung zur axialen Fixierung, die ein drehbares Antriebsteil, nämlich die Gelenkglocke 2, mit einem drehbaren Radlagerteil, nämlich der Radnabe 1, fixiert. Weiter kombiniert der Rastring 11 in sich den ringförmigen Befestigungsteil und das Rastelement der Vorrichtung zur Axialfixierung in ein einziges Bauteil.

An einer radialen Innenfläche der Radnabe 1 befindet sich eine Nut 13, in der der Rastring 11 im elastisch beanspruchten Zustand einliegt. Der Rastring 11 kann beispielsweise aus einem Metall oder Kunststoff bestehen und ist an einer Stelle in Umfangsrichtung unterbrochen, so das dieser zwei sich gegenüberliegende Enden aufweist, die im elastisch beanspruchten Zustand weiter voneinander entfernt sind, als im elastisch unbeanspruchten Zustand. Wie in der Fig. 2 gezeigt, wird der Rastring 11 im ersten Montagezustand von einem zylinderartigen Fortsatz der Gelenkglocke 2 in die Nut 13 hineingedrückt und dabei radial aufgeweitet. Die sich gegenüberliegenden Enden des Ringes entfernen sich während des Vorgangs der Aufweitung voneinander.

Die Axialpositionen der Nut 13 und einer Nut 12 auf der Gelenkglocke 2 sind derartig abgestimmt, dass die Stirnverzahnungen 8,9 ineinander eingreifen, wenn sich die Nuten 13 und 12 radial gegenüberliegen. Liegen sie sich jedoch nicht gegenüber, so liegt auch noch kein Eingriff der Stirnverzahnungen 8,9 vor. In diesem ersten Montagezustand sind das Radlager und die Gelenkglocke 2 ohne weiteres wieder voneinander entfernbar, woran der Monteur erkennen kann, dass der Eingriff der Stirnverzahnungen 8,9 noch nicht stattgefunden hat. Erfolgt eine derartige Separierung geht der Rastring 11 wieder in einen unbeanspruchten Zustand über, den er vor der Montage eingenommen hatte.

Vorteilhafterweise weist das Radlager eine Abdeckung 14 auf, die am Innenring 4 befestigt ist und die Stirnverzahnungen 8,9 abdeckt und dadurch schützt. Die Abdeckung 14 kann vorinstalliert werden, weil eine direkte Sicht auf die Stirnverzahnungen 8,9 bei der Installation nicht notwendig ist. Alternativ ist eine derartige Abdeckung 14 auch mit der Dichtungsanordnung 10, insbesondere mit deren Schleuderring kombinierbar beziehungsweise integrierbar.

Fig. 3 zeigt einen Ausschnitt der Stirnverzahnungen 8,9 aus Fig. 2 in radialer Betrachtungsrichtung zur Rotationsachse des Radlagers hin. Das Radlager befindet sich im ersten Montagezustand, indem noch kein Eingriff der Stirnverzahnungen 8,9 erzielt worden ist. Es ist zu erkennen, dass die Zähne der Stirnverzahnungen aufeinander aufstehen. Würde in diesem Zustand eine Zentralschraube festgezogen, so würden sich beim Betrieb beide Stirnverzahnungen 8,9 aus dem Kraftschluss lösen und sich gegenseitig beschädigen.

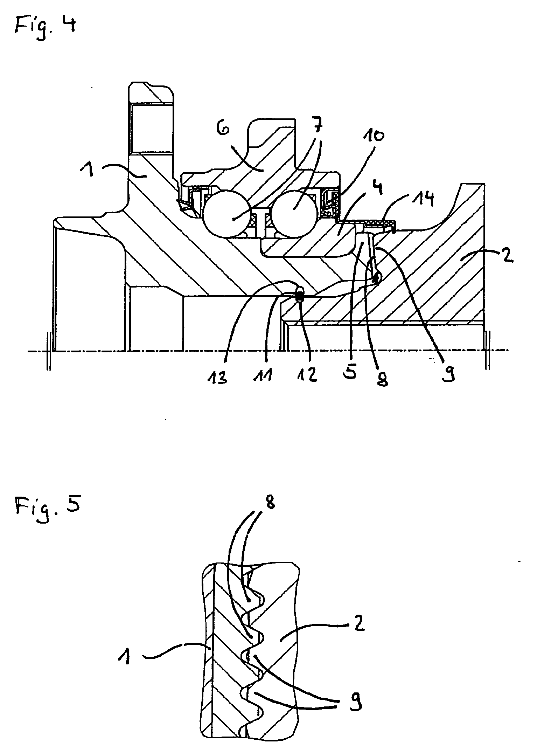

Fig. 4 zeigt eine geschnittene Ansicht des Radlagers aus Fig. 2 mit dem Rastring 11 in einem elastisch unbeanspruchten Zustand. Das Radlager befindet sich in einem zweiten Montagezustand, in welchem die Stirnverzahnungen 8,9 ineinander eingreifen. Zugleich weisen die Nuten 12 und 13 die gleiche axiale Position auf und liegen sich radial gegenüber. Somit erhält der Rastring 11 zusätzlichen Raum um in den elastisch unbeanspruchten Zustand zu gelangen. Das Radialmaß des Rastring 11 im elastisch unbeanspruchten Zustand entspricht einer Ausdehnung des Rastring 11, die notwendig ist, um in beiden Nuten 12,13 teilweise einzuliegen. Damit fixiert der Rastring 11 die relative Position der Radnabe 1 gegenüber der Gelenkglocke 2. Ausschlaggebend dafür ist, dass in diesem zweiten Montageschritt auch ein Eingriff der Stirnverzahnung 8 in die Stirnverzahnung 9 vorliegt.

Vorteilhafterweise stellen die Nuten 12,13 dem Rastring 11 ein gewisses Axialspiel zur Verfügung, welches erlaubt mittels einer Zentralschraube die Radnabe 1 gegenüber der Gelenkglocke 2 mitausreichender Vorspannungskraft zu verschrauben und den Eingriff der Stirnverzahnungen 8,9 weiter zu vertiefen. Jedoch kann hier auch eine gewisse Verformung oder auch Zerstörung des Rastringes 11 in Kauf genommen werden, da dieser seiner Aufgabe, den Eingriff grundsätzlich anzuzeigen, erfüllt hat. Eine Zerstörung des Rastringes 11 ist sogar insoweit vorteilhaft, als dass dieser bei einer Demontage nicht mehr im Weg steht.

Vorteilhafterweise kann der Rastring 11 vor der Montage sowohl in der Nut 12 der Gelenkglocke 2, als auch in die Nut 13 der Radnabe 1 einliegen. Dies bedeutet, dass Gelenkglocke 2 und Radnabe 1 ihre Rollen (Halten beziehungsweise Deformieren des Rastringes 11) vertauschen.

Bei einer vorteilhaften Ausführungsform besteht der Rastring 11 hauptsächlich aus Gummi oder einem anderen elastischen Material und ist ununterbrochen. Ein derartiger Rastring 11 erzielt den gleichen Effekt, wie ein unterbrochener Rastring 11 aus Metall, wobei die Fixierung nicht zu stark ist und gegebenenfalls auch wieder ohne weiteres rückgängig gemacht werden kann. Vorteilhaft ist auch, dass der Gummiring leichter ist als der Metallring und daher potentiell Kraftstoff einsparen hilft. Andererseits ist es mittels des Metallrings einfacher ein Klicken zu erzeugen, welches dem Monteur den Eingriff der Stirnverzahnungen 8,9 eindeutig angezeigt.

Fig. 5 zeigt einen Ausschnitt der Stirnverzahnungen 8,9 aus Fig. 4 in radialer Betrachtungsrichtung zur Rotationsachse des Radlagers hin. Im zweiten Montagezustand greifen die Stirnverzahnungen 8,9 ineinander ein und ermöglichen nach dem Anziehen der Zentralschraube eine betriebsgerechte Zahnposition.

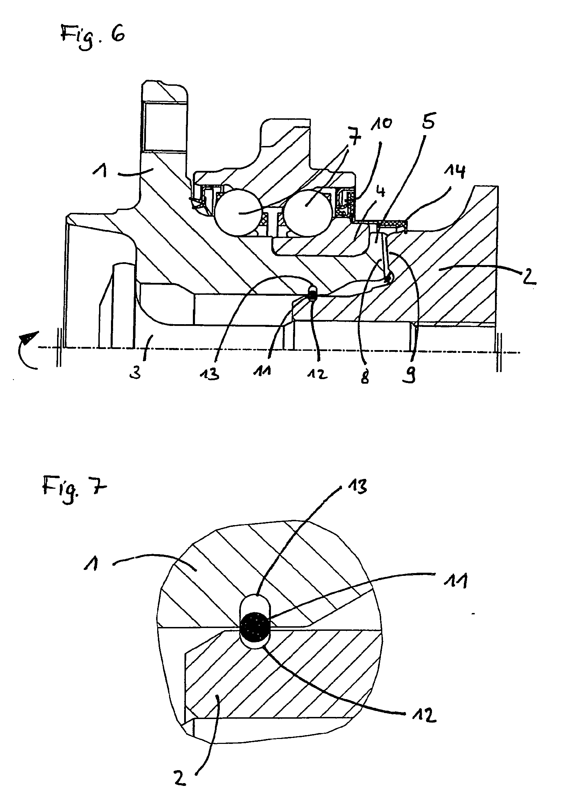

Fig. 6 zeigt eine geschnittene Ansicht des Radlagers aus Fig. 4 mit festgezogener Zentralschraube 3.

Fig. 7 zeigt einen vergrößerten Ausschnitt des Bereiches um den Rastring 11 aus Fig. 6. Es ist vorteilhaft, wenn der Rastring 11 in die Nut 13 der Radnabe 1 genügend Platz findet, um bei elastischer Beanspruchung mit dem eigenen Volumen komplett in der Radnabe 1 einzuliegen. Dadurch wird die Reibung des Rastringes 11 auf der Gelenkglocke 2, oder im allgemeinen auf Bauteilen des Antriebsstranges, minimiert, wenn sich das Radlager im ersten Montagezustand befindet.

Vorteilhafterweise ist die Nut 12 zu klein um den Rastring 11 komplett aufzunehmen, womit verhindert wird, dass beispielsweise bei einem als Gummiring ausgeführten Rastring 11 dieser völlig in der Gelenkglocke 2 aufgenommen werden kann. Beim Übergang in den zweiten Montagezustand ist damit sichergestellt, dass der Rastring 11 immer noch in Wirkverbindungen mit der Radnabe 1, beziehungsweise mit deren Nut 13 verbleibt.

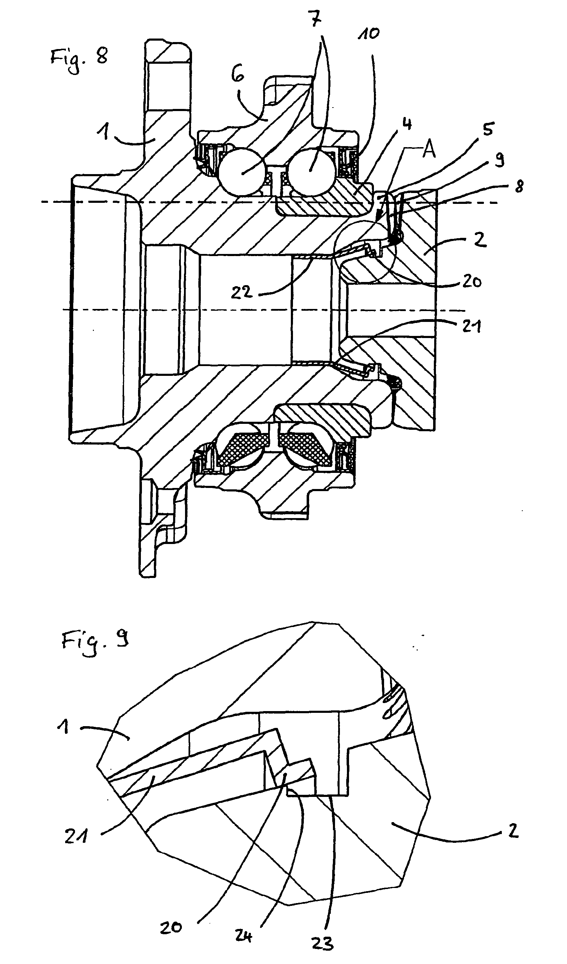

Fig. 8 zeigt eine geschnittene Ansicht eines Radlagers in einem ersten Montagezustand mit einem ersten elastisch beanspruchten Fixierelement 21.

Die Vorrichtung zur Axialfixierung ist als Fixierelement 21 ausgeführt, welches einen Befestigungsteil 22 und ein Rastelement 20 aufweist. Das Fixierelement 21 ist zur Fixierung eines drehbaren Antriebsteils, nämlich der Gelenkglocke 2, mit einem drehbaren Radlagerteil, nämlich der Radnabe 1, vorgesehen.

Das Radlager unterscheidet sich hinsichtlich der Radnabe 1, dem Außenring 6, den Wälzkörperreihen 7, der Dichtungsanordnung 10 und dem Innenring 4 nicht vom Ausführungsbeispiel der Fig. 2 bis 7. Desweiteren weist die Radlageranordnung zwei Stirnverzahnungen 8,9 auf, wie sie bereits vorbekannt sind.

Das Fixierelement 21 wird vor der Montage mittels des Befestigungsteils 22 in der der Rotationsachse zugewandten Innenseite der Radnabe 1 befestigt. Das Fixierelement 21 kann dabei eingepresst oder eingeklemmt werden, wobei der die Rasternase 20 tragende Teil des Fixierelement 21 im Vergleich zum zylindrischen Befestigungsteil 22 in Bezug zur Rotationsachse des Radlagers einen Winkel einschließt und damit bei der Positionierung des Fixierelements 21 in Bezug zur Radnabe 1 unterstützend als Positionierhilfe fungiert, indem der bei dessen Axialbewegung an die Innenseite der Radnabe 1 anstößt.

Das Fixierelement 21 ist derart konzipiert, dass es durch die Gelenkglocke 2 oder durch Teile derselben aufgeweitet werden kann. Diese Aufweitung kann durch einen Längsschnitt gewährleistet werden, der das gesamte Fixierelement 21 axial durchläuft oder durch einen oder mehrere Schnitte, die lediglich in der Nähe der Rasternase 20 in axialer Richtung orientiert sind. Damit können sich die Rastnasen 20 in Umfangsrichtung voneinander separieren, wenn die Aufweitung durch die Gelenkglocke 2 stattfindet.

Alternativ kann das Fixierelement 21 auch mit einem entsprechend elastischen Material, z.B. Kunststoff gefertigt werden, womit auch eine ringförmige Rastnase, das heißt also ein Schnapp- oder Rastring realisiert würde.

Bei der Aufweitung des Fixierelements 21 übt die Gelenkglocke 2 oder ein Teil derselben Kraft auf die Rastnasen 20 aus und drückt diese auseinander. Dies kann durch eine entsprechende Formgebung der Gelenkglocke 2, zum Beispiel durch abgerundete Ecken derselben, unterstützt werden.

Die elastische Beanspruchung des Fixierelements 21 kann zusätzlich durch eine geeignete Materialwahl unterstützt werden. Das Fixierelement 21 kann zumindest teilweise aus Kunststoff, Metall oder ähnlichen Materialien bestehen und gegebenenfalls auch Teile aus Gummi aufweisen.

Fig. 9 zeigt einen vergrößerten Ausschnitt des Bereiches um die Rastnase 20 des ersten Fixierelements 21 aus Fig. 8. Dazu gehört insbesondere die Nut 23 der Gelenkglocke 2, die zum Einschnappen für die Rastnase 20 vorgesehen ist. Die radialen Flächen der Nut 23 sind rechtwinklig zueinander orientiert und bieten genügend Raum für die Rastnase 20 einzuschnappen und zudem eine Rückhaltefläche 24, die eine axiale Entfernung der zu fixierenden Teile verhindert.

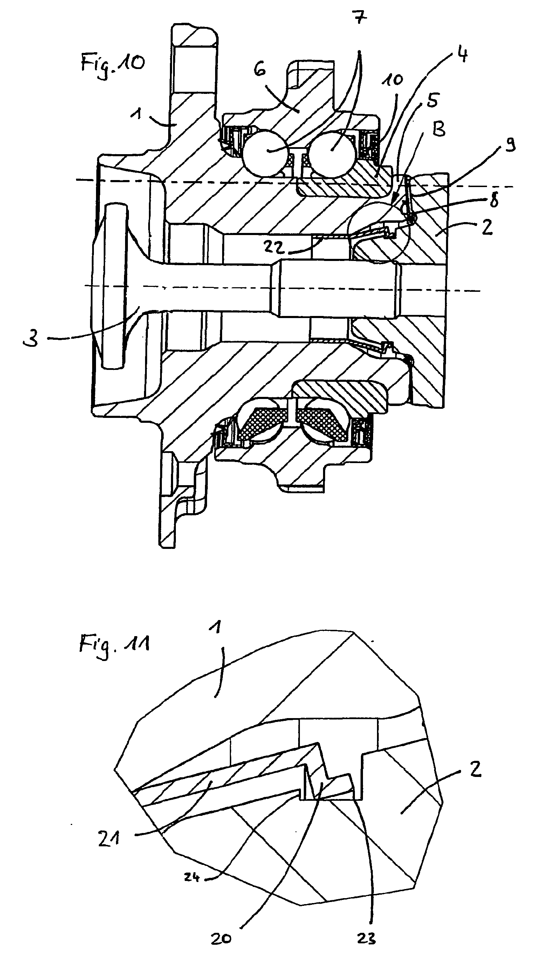

Fig. 10 zeigt eine geschnittene Ansicht des Radlagers aus Fig. 8 in einem zweiten Montagezustand mit dem ersten elastisch unbeanspruchten Fixierelement 21.

Das Fixierelement 21 ist in den elastisch unbeanspruchten Zustand übergegangen und fixiert die Radnabe 1 mit der Gelenkglocke 2. Die Stirnverzahnungen 8,9 befinden sich im Eingriff, wobei auch bereits die Zentralschraube 3 platziert wurde. Die Montage des Radlagers ist damit abgeschlossen.

Vorteilhaft an dieser Ausführungsform ist insbesondere die Tatsache, dass bei einer geringen Klemmkraft des Befestigungsteils 22 auch eine Deinstallation des Radlagers möglich ist, ohne das eingerastete Fixierelement 21 zu beschädigen. Dieses wird bei der Demontage durch die Gelenkglocke 2 beziehungsweise deren Nut 23 gehalten und aus dem Inneren der Radnabe 1 herausgezogen.

Fig. 11 zeigt einen vergrößerten Ausschnitt des Bereiches um die Rastnase 20 des ersten Fixierelements 21 aus Fig. 10.

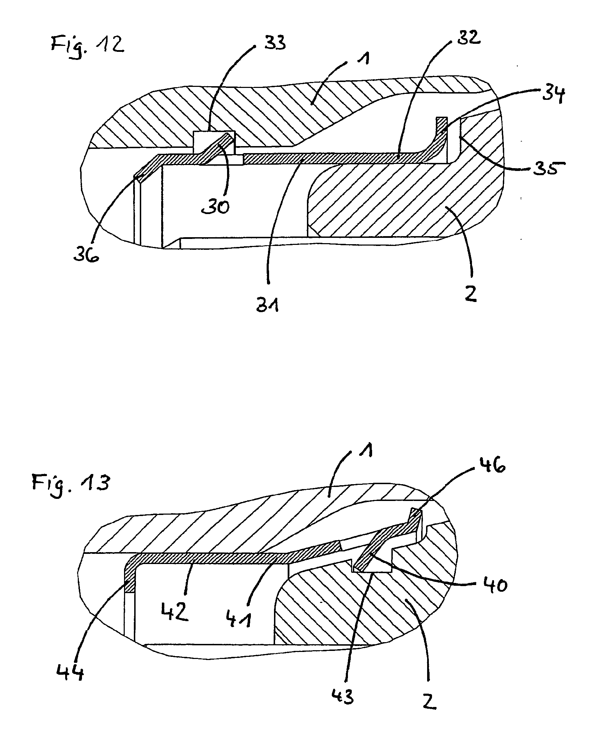

Fig. 12 zeigt eine geschnittene Ansicht eines zweiten Fixierelements 31 im elastisch unbeanspruchten Zustand. Das Fixierelement 31 zeichnet sich durch einen Befestigungsteil 32 aus, der auf der Gelenkglocke 2 durch Presssitz befestigt oder aufgeklemmt ist. Zudem weist das Fixierelement eine Einführhilfe 36 auf, die das Zusammenführen mit der Radnabe 1 unterstützt.

Die Grundform des Fixierelements 31 ist eine Zylinderform, von der lediglich die Einführhilfe 36, die Rastnase 30 und ein radialer Fortsatz 34 abweichen. Vorteilhafterweise sind mehrere Rastnasen 30 angebracht, die teilweise aus dem Fixierelement 31 ausgestanzt und danach herausgebogen wurden. Dies spart Material und eröffnet die Möglichkeit die Anzahl der Nasen und auch deren umfängliche Ausdehnung beliebig festzulegen. Um einer Verkantung vorzubeugen ist minimal das Anbringen zweier sich gegenüberliegender Rastnasen 30 sinnvoll. Mit drei Rastnasen 30 kann eine Selbstzentierung erreicht werden, die die Montageeigentschaften des Fixierelements 31 weiter verbessert. Darüber hinaus können mehrere Rastnasen 30 vorgesehen sein, die in Umfangsrichtung angeordnet sind.

Der radiale Fortsatz 34 kann zur Positionierung des Fixierelements 31 gegenüber der Gelenkglocke 2 verwendet werden, wobei der Anschlag 35 als Referenz dient. Es kann vorgesehen sein, dass zwischen dem radialen Fortsatz 34 und dem Anschlag 35 ein Abstandsring vorgesehen ist oder anderweitig der korrekte Abstand, zum Beispiel durch nachmessen, eingehalten wird. Denkbar ist auch, dass der radiale Fortsatz 34 am Anschlag 35 anliegen soll.

Fig. 13 zeigt eine geschnittene Ansicht eines dritten Fixierelements 41 im elastisch unbeanspruchten Zustand. Die Radnabe 1 und die Gelenkglocke 2 sind bereits miteinander durch das einrasten der Rasternase 40 fixiert. Auch das Fixierelement 41 weist einen Befestigungsteil 42 auf, der in einen radialem Fortsatz 44 mündet, die als Einführhilfe verwendbar ist. In ähnlicher Weise ist auch der Fortsatz 46 zu sehen, wenn es gilt das Fixierelement 41 auf der Gelenkglocke 2 aufzusetzen.

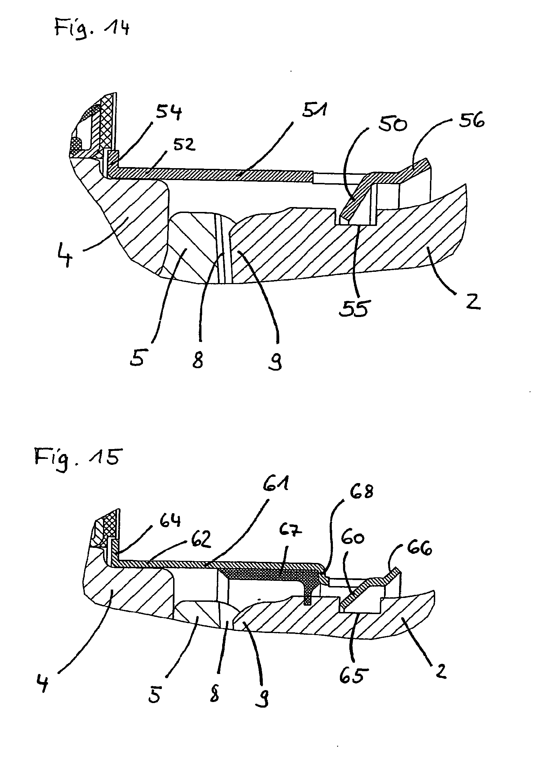

Fig. 14 zeigt eine geschnittene Ansicht eines vierten Fixierelements 51 im elastisch unbeanspruchten Zustand. Es handelt sich hierbei um ein Fixierelement 51, welches zur Umfassung der beiden Stirnverzahnungen 8,9 vorgesehen ist und damit auch alle anderen Rost empfindlichen Teile der Drehmomente Verbindung abdeckt. Dazu gehören auch der Innenring 4 und der Wälznietbund 5.

Vorteilhafterweise wird der radiale Fortsatz 54 zum Anschluss an eine Dichtungsanordnung verwendet oder zur Abstandhaltung von Teilen des Innenrings 4 oder der Dichtungsanordnung. Die Rastnasen 50 schnappten in der Nut 55 ein, wenn das am Innenring 4 deutlich mit dem Befestigungsbereich 52 befestigte Fixierelement 51 über die Gelenkglocke 2 gestülpt wird. Als Einführhilfe dient der Fortsatz 56.

Fig. 15 zeigt eine geschnittene Ansicht eines fünften Fixierelements 61 im elastisch unbeanspruchten Zustand. Das Fixierelement 61 entspricht im wesentlichen dem Fixierelement 51 der vorangegangenen Figur. Im Unterschied zu diesem weist das Fixierelement 61 eine Dichtung 67 auf, die mit einer Dichtlippe dafür sorgt, dass keine Feuchtigkeit an die Stirnverzahnungen 8,9 beziehungsweise den Wälzbund oder dem Innenring 4 gelangen kann.

Vorteilhafterweise extendiert der radiale Fortsatz 64 radial weiter als der radiale Fortsatz 54, womit ein besseres Auffangen von Spritzwasser und dessen umfängliche Ableitung gewährleistet ist.

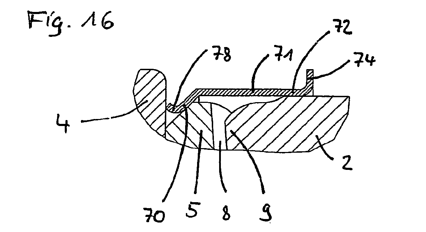

Fig. 16 zeigt eine geschnittene Ansicht eines sechsten Fixierelements 71 im elastisch unbeanspruchten Zustand. Das Fixierelement 71 weist einen Befestigungsteil 72 auf, der zum Aufsetzen auf der Gelenkglocke 2 vorgesehen ist und in einen radialen Fortsatz 74 übergeht. Die Rastnase 70 ist zum einrasten in einer ringförmigen Kerbe zwischen dem Wälznietbund 5 und dem Innenring 4 vorgesehen und weist eine Einführhilfe 78 auf, die als Teilrundung ausgeführt ist.

Auch das sechste Fixierelement 71 ist mit einer Dichtlippe (nicht abgebildet) ausführbar, die entweder am Innenring 4 oder am Wälznietbund 5 anliegt, um die Verzahnungen 8,9 vor Feuchtigkeit und Schmutzpartikeln zu schützen.

Zusammenfassend betrifft die Erfindung eine Vorrichtung zur axialen Fixierung eines drehbaren Radlagerteils eines Radlagers mit einem drehbaren

Antriebsteil eines Antriebsstranges. Es soll eine Montagehilfe bereitgestellt werden, die eine Überprüfung der Zahnposition der beteiligten Stirnverzahnungen ermöglicht. Dies wird dadurch gelöst, dass die Vorrichtung zur axialen Fixierung einen im wesentlichen zylindrischen oder ringförmigen Befestigungsteil und ein Rastelement aufweist, wobei entweder der im wesentlichen zylindrische oder ringförmige Befestigungsteil zur Befestigung an dem drehbaren Antriebsteil und das Rastelement zur Verrastung mit dem drehbaren Radlagerteils vorgesehen ist oder der im wesentlichen zylindrische oder ringförmige Befestigungsteil zur Befestigung an dem drehbaren Radlagerteil und das Rastelement zur Verrastung mit dem drehbaren Antriebsteil vorgesehen ist.

### Bezugszeichenliste

| | |
|---|---|
| A | vergrößerter Bereich |
| B | vergrößerter Bereich |
| 1 | Radnabe |
| 2 | Gelenkglocke |
| 3 | Zentralschraube |
| 4 | Innenring |
| 5 | Wälznietbund |
| 6 | Außenringen |
| 7 | Wälzkörperreihen |
| 8 | Stirnverzahnung der Radnabe |
| 9 | Stirnverzahnung der Gelenkglocke |
| 10 | Dichtungsanordnung |
| 11 | Rastring |
| 12 | Nut |
| 13 | Nut |
| 14 | Abdeckung |
| 20 | Rastnase |
| 21 | Fixierelement |
| 22 | zylindrisches Befestigungsteil |
| 23 | Nut |
| 24 | Rückhaltefläche |
| 30 | Rastnase |
| 31 | Fixierelement |
| 32 | zylindrisches Befestigungsteil |
| 33 | Nut |
| 34 | radialer Fortsatz |
| 35 | Anschlag |
| 36 | Einführhilfe |
| 40 | Rastnase |
| 41 | Fixierelement |
| 42 | zylindrische Befestigungsteil |
| 43 | Nut |
| 44 | Einführhilfe |
| 46 | Fortsatz |
| 50 | Rastnase |
| 51 | Fixierelement |
| 52 | zylindrische Befestigungsteil |
| 54 | radialer Fortsatz |
| 55 | Nut |
| 56 | Fortsatz |
| 60 | Rastnase |
| 61 | Fixierelement |
| 62 | zylindrische Befestigungsteil |
| 64 | radialer Fortsatz |
| 65 | Nut |
| 66 | Fortsatz |
| 67 | Dichtung |
| 70 | Rastnase |
| 71 | Fixierelement |
| 72 | Befestigungsteil |
| 74 | radialer Fortsatz |
| 78 | Einführhilfe |

## Patentansprüche

1. Radlageranordnung mit einem drehbahren Radlagerteil (1, 4, 5, 10) und einer Vorrichtung zur axialen Fixierung (11, 21, 31, 41, 51, 61, 71) des drehbaren Radlagerteils (1, 4, 5, 10) eines Radlagers mit einem drehbaren Antriebsteil (2) eines Antriebsstranges, **dadurch gekennzeichnet, dass** die Vorrichtung zur axialen Fixierung (11, 21, 31, 41, 51, 61, 71) einen im Wesentlichen zylindrischen oder ringförmigen Befestigungsteil (11, 22, 32, 42, 52, 62, 77) und ein Rastelement (11, 20, 30, 40, 50, 60, 70) aufweist, wobei das Rastelement (11, 20, 30, 40, 50, 60, 70) nur dann einrastbar ist, wenn eine radlagerseitige Stirnverzahnung (8) zumindest teilweise in eine antriebsstrangseitige Stirnverzahnung (9) eingreift und wobei entweder
- der im Wesentlichen zylindrische oder ringförmige Befestigungsteil (11, 22, 32, 42, 52, 62, 72) zur Befestigung an dem drehbaren Antriebsteil (2) und das Rastelement (11, 20, 30, 40, 50, 60, 70) zur Verrastung mit dem drehbaren Radlagerteil (1, 4, 5, 10) vorgesehen ist, oder
- der im Wesentlichen zylindrische oder ringförmige Befestigungsteil (11, 22, 32, 42, 52, 62, 72) zur Befestigung an dem drehbaren Radlagerteil (1, 4, 5, 10) und das Rastelement (11, 20, 30, 40, 50, 60, 70) zur Verrastung mit dem drehbaren Antriebsteil (2) vorgesehen ist.

2. Radlageranordnung nach Anspruch 1, wobei das Befestigungsteil (11, 22, 32, 42, 52, 62, 72) zur Befestigung durch Presssitz, Klemmung, Verrastung, Verschraubung oder zur Einlage in einer Nut (11) vorgesehen ist.

3. Radlageranordnung nach einem der vorhergehenden Ansprüche, wobei das Rastelement (11, 20, 30, 40, 50, 60, 70) bei der Installation des Radlagers in einem verrasteten Zustand elastisch unbeansprucht und in einem nicht verrasteten Zustand elastisch beansprucht ist.

4. Radlageranordnung nach einem der vorhergehenden Ansprüche, wobei das Befestigungsteil (11, 22, 32, 42, 52, 62, 72) das Rastelement (11, 20, 30, 40, 50, 60, 70) aufweist, einstückig mit diesem verbunden, mit diesem verbindbar oder mit diesem identisch ist.

5. Radlageranordnung nach einem der vorhergehenden Ansprüche, wobei das Rastelement (11, 20, 30, 40, 50, 60, 70) eine Schnappnase, ein Schnappring, eine Rastnase (20, 30, 40, 50, 60, 70) oder ein Rastring (11) ist.

6. Radlageranordnung nach einem der vorhergehenden Ansprüche, wobei die Vorrichtung (11, 21, 31, 41, 51, 61, 71) zur Umfassung einer Stirnverzahnung (8, 9) vorgesehen ist.

7. Radlageranordnung nach Anspruch 6, wobei die Vorrichtung (11, 21, 31, 41, 51, 61, 71) eine Dichtung (67) zum Schutz der Stirnverzahnung (8, 9) aufweist.

8. Radlageranordnung nach einem der vorhergehenden Ansprüche, wobei die Vorrichtung (11, 21, 31, 41, 51, 61, 71) zur Generierung eines hörbaren Geräusches bei Verrastung des Rastelements (11, 20, 30, 40, 50, 60, 70) vorgesehen ist.

9. Radlageranordnung nach einem der vorhergehenden Ansprüche, wobei die Vorrichtung (11, 21, 31, 41, 51, 61, 71) zur axialen Fixierung einstückig mit dem drehbaren Radlagerteil (1, 4, 5, 10) oder dem drehbaren Antriebsteil (2) ausgeführt ist.

10. Radlageranordnung nach Anspruch 1, wobei das drehbare Radlagerteil (1, 4, 5, 10) ein Teil einer Dichtungsanordnung (10), ein Innenring (4), ein Wälznietbund (5) und/oder eine Radnabe (1) ist.

11. Radlageranordnung nach Anspruch 1 oder 10, wobei das drehbare Antriebsteil (2) ein Ring, eine Gelenkglocke (2) oder ein mit einem dieser Teile verbindbares Teil ist.

12. Radlageranordnung nach einem der Ansprüche 1, 10 oder 11, wobei die Vorrichtung zur axialen Fixierung (11, 21, 31, 41, 51, 61, 71) zur Umfassung der Stirnverzahnung (8, 9) vorgesehen ist oder selbst zumindest teilweise von der Strinverzahnung (8,9) und/oder dem Innenring (4) des Radlagers umfasst wird.

## Claims

1. Wheel bearing arrangement having a rotatable wheel bearing part (1, 4, 5, 10) and a device for axially fixing (11, 21, 31, 41, 51, 61, 71) the rotatable wheel bearing part (1, 4, 5, 10) of a wheel bearing with a rotatable drive part (2) of a drive train, **characterized in that** the device for axial fixation (11, 21, 31, 41, 51, 61, 71) has a substantially cylindrical or annular fastening part (11, 22, 32, 42, 52, 62, 77) and a latching element (11, 20, 30, 40, 50, 60, 70), it being possible for the latching element (11, 20, 30, 40, 50, 60, 70) to be latched only when a wheel bearing-side spur toothing system (8) engages at least partially into a drive train-side spur toothing system (9) and either
- the substantially cylindrical or annular fastening part (11, 22, 32, 42, 52, 62, 72) being provided for fastening to the rotatable drive part (2) and the latching element (11, 20, 30, 40, 50, 60, 70) being provided for latching with the rotatable wheel bearing part (1, 4, 5, 10), or
- the substantially cylindrical or annular fastening part (11, 22, 32, 42, 52, 62, 72) being provided for fastening to the rotatable wheel bearing part (1, 4, 5, 10) and the latching element (11, 20, 30, 40, 50, 60, 70) being provided for latching with the rotatable drive part (2).

2. Wheel bearing arrangement according to Claim 1, the fastening part (11, 22, 32, 42, 52, 62, 72) being provided for fastening by press fit, clamping, latching, screwing or for insertion in a groove (11).

3. Wheel bearing arrangement according to one of the preceding claims, the latching element (11, 20, 30, 40, 50, 60, 70), during the mounting of the wheel bearing, being unloaded elastically in a latched state and being loaded elastically in an unlatched state.

4. Wheel bearing arrangement according to one of the preceding claims, the fastening part (11, 22, 32, 42, 52, 62, 72) having the latching element (11, 20, 30, 40, 50, 60, 70) being connected integrally to the latter, being capable of being connected to the latter or being identical to the latter.

5. Wheel bearing arrangement according to one of the preceding claims, the latching element (11, 20, 30, 40, 50, 60, 70) being a snap-in lug, a snap-in ring, a latching lug (20, 30, 40, 50, 60, 70) or a latching ring (11).

6. Wheel bearing arrangement according to one of the preceding claims, the device (11, 21, 31, 41, 51, 61, 71) being provided for clasping a spur toothing system (8, 9).

7. Wheel bearing arrangement according to Claim 6, the device (11, 21, 31, 41, 51, 61, 71) having a seal (67) for protecting the spur toothing (8, 9).

8. Wheel bearing arrangement according to one of the preceding claims, the device (11, 21, 31, 41, 51, 61, 71) being provided for generating an audible noise during latching of the latching element (11, 20, 30, 40, 50, 60, 70).

9. Wheel bearing arrangement according to one of the preceding claims, the device (11, 21, 31, 41, 51, 61, 71) for axial fixation being configured integrally with the rotatable wheel bearing part (1, 4, 5, 10) or the rotatable drive part (2).

10. Wheel bearing arrangement according to Claim 1, the rotatable wheel bearing part (1, 4, 5, 10) being a part of a sealing arrangement (10), an inner ring (4), a rolling rivet flange (5) and/or a wheel hub (1).

11. Wheel bearing arrangement according to Claim 1 or 10, the rotatable drive part (2) being a ring, an articulation bell (2) or a part which can be connected to one of said parts.

12. Wheel bearing arrangement according to one of Claims 1, 10 or 11, the device for axial fixation (11, 21, 31, 41, 51, 61, 71) being provided for clasping the spur toothing (8, 9) or itself being clasped at least partially by the spur toothing (8, 9) and/or the inner ring (4) of the wheel bearing.

## Revendications

1. Agencement de palier de roue avec une partie de palier de roue rotative (1, 4, 5, 10) et un dispositif pour la fixation axiale (11, 21, 31, 41, 51, 61, 71) de la partie de palier de roue rotative (1, 4, 5, 10) d'un palier de roue à une partie d'entraînement rotative (2) d'une chaîne cinématique, **caractérisé en ce que** le dispositif pour la fixation axiale (11, 21, 31, 41, 51, 61, 71) présente une pièce de fixation (11, 22, 32, 42, 52, 62, 72) essentiellement cylindrique ou annulaire et un élément d'encliquetage (11, 20, 30, 40, 50, 60, 70), l'élément d'encliquetage (11, 20, 30, 40, 50, 60, 70) ne pouvant être encliqueté que lorsqu'une denture droite (8) du côté du palier de roue vient en prise au moins en partie dans une denture droite (9) du côté de la chaîne cinématique, et
- soit la pièce de fixation (11, 22, 32, 42, 52, 62, 72) essentiellement cylindrique ou annulaire est prévue pour la fixation sur la partie d'entraînement rotative (2) et l'élément d'encliquetage (11, 20, 30, 40, 50, 60, 70) est prévu pour l'encliquetage avec la partie de palier de roue rotative (1, 4, 5, 10),
- soit la pièce de fixation (11, 22, 32, 42, 52, 62, 72) essentiellement cylindrique ou annulaire est prévue pour la fixation sur la partie de palier de roue rotative (1, 4, 5, 10) et l'élément d'encliquetage (11, 20, 30, 40, 50, 60, 70) est prévu pour l'encliquetage avec la partie d'entraînement rotative (2).

2. Agencement de palier de roue selon la revendication 1, dans lequel la pièce de fixation (11, 22, 32, 42, 52, 62, 72) est prévue pour la fixation par ajustement par pressage, par serrage, par encliquetage, par vissage ou pour l'insertion dans une rainure (11).

3. Agencement de palier de roue selon l'une quelconque des revendications précédentes, dans lequel l'élément d'encliquetage (11, 20, 30, 40, 50, 60, 70) lors de l'installation du palier de roue n'est pas sollicité élastiquement dans un état encliqueté, et est sollicité élastiquement dans un état non encliqueté.

4. Agencement de palier de roue selon l'une quelconque des revendications précédentes, dans lequel la pièce de fixation (11, 22, 32, 42, 52, 62, 72) présente l'élément d'encliquetage (11, 20, 30, 40, 50, 60, 70), est connectée d'une seule pièce à celui-ci, peut être connectée à celui-ci, ou est identique à celui-ci.

5. Agencement de palier de roue selon l'une quelconque des revendications précédentes, dans lequel l'élément d'encliquetage (11, 20, 30, 40, 50, 60, 70) est un nez d'encliquetage, une bague d'encliquetage, un nez d'encliquetage (20, 30, 40, 50, 60, 70) ou une bague d'encliquetage (11).

6. Agencement de palier de roue selon l'une quelconque des revendications précédentes, dans lequel le dispositif (11, 21, 31, 41, 51, 61, 71) est prévu pour comprendre une denture droite (8, 9).

7. Agencement de palier de roue selon la revendication 6, dans lequel le dispositif (11, 21, 31, 41, 51, 61, 71) présente un joint d'étanchéité (67) pour protéger la denture droite (8, 9).

8. Agencement de palier de roue selon l'une quelconque des revendications précédentes, dans lequel le dispositif (11, 21, 31, 41, 51, 61, 71) est prévu pour générer un bruit audible lors de l'encliquetage de l'élément d'encliquetage (11, 20, 30, 40, 50, 60, 70).

9. Agencement de palier de roue selon l'une quelconque des revendications précédentes, dans lequel le dispositif (11, 21, 31, 41, 51, 61, 71) est réalisé pour la fixation axiale d'une seule pièce à la partie de palier de roue rotative (1, 4, 5, 10) ou à la partie d'entraînement rotative (2).

10. Agencement de palier de roue selon la revendication 1, dans lequel la partie de palier de roue (1, 4, 5, 10) est une partie d'un agencement de joint d'étanchéité (10), une bague intérieure (4), un épaulement de rivetage de roulement (5) et/ou un moyeu de roue (1).

11. Agencement de palier de roue selon la revendication 1 ou 10, dans lequel la partie d'entraînement rotative (2) est une bague, une cloche d'articulation (2) ou une pièce pouvant être connectée à ces pièces.

12. Agencement de palier de roue selon l'une quelconque des revendications 1, 10 ou 11, dans lequel le dispositif pour la fixation axiale (11, 21, 31, 41, 51, 61, 71) est prévu pour comprendre la denture droite (8, 9) ou est compris lui même au moins en partie par la denture droite (8, 9) et/ou par la bague intérieure (4) du palier de roue.
